# EUROPEAN PATENT SPECIFICATION

(11) **EP 0 438 020 B1**
(45) Date of publication and mention of the grant of the patent: **19.06.1996**
(21) Application number: 90480212.1
(22) Date of filing: 12.12.1990
(51) Int. Cl.: G06F 17/60

(54) **Method and system for automatically controlling the distribution of data objects**
Verfahren und System zur automatischen Steuerung der Verteilung von Datenobjekten
Procédé et système pour la commande automatique de la distribution d'objets de donnée

(30) Priority: 17.01.1990 US 466162
(43) Date of publication of application: 24.07.1991
(73) Proprietor: International Business Machines Corporation, Armonk, N.Y. 10504 (US)
(72) Inventor: Bale, Richard Christopher, Alpharetta, GA 30201 (US); Hammer, Emily Holland, Atlanta, GA 30339 (US); Krosner, Stephen Paul, Marietta, GA 30062 (US); Martinek, Joseph Peter, Dunwoody, GA 30350 (US); Miller, Dallas Howard, Marietta, GA 30062 (US); Withers, David Harold, Roswell, GA 30075 (US)
(74) Representative: Bonneau, Gérard

(56) References cited:
- IBM TECHNICAL DISCLOSURE BULLETIN. vol. 29, no. 9, February 1987, NEW YORK US pages 3831 - 3832 IBM 'DISTRIBUTION LIST GENERATOR'
- NEC RES. & DEVELOP., SPECIAL ISSUE ON "C&C OFFICE SYSTEMS" 1985, TOKYO, JAPAN pages 216 - 224 KANAMORI, YAMAZAKI 'Integrated Office System'
- USENIX ASSOCIATION SUMMER CONFERENCE PROCEEDINGS 13 June 1986, ATLANTA, GEORGIA USA pages 142 - 158 CABRERA, MOWAT 'Pollster: A Document Annotation System for Distributed Environments'

## Description

This invention relates generally to the integration of information flow in a business enterprise and, in particular, to a method and system for controlling the distribution of collections of data objects to users or application processes in a computer integrated manufacturing (CIM) system.

A key to integration of information flow in a business enterprise is the ability to assemble a diverse collection of data and refer to it in a common way. One example is in the purchasing function where graphics, text history, purchase order formats, management approvals, and accounting calculations are all part of a "file folder" for the purchase of an item. Another example arises in the engineering release function, where geometric information, machinery instructions, bill of material sections, and cost information are routed as a "file folder" for management and technical approvals on the way to the manufacturing facility.

Each electronic file folder can be regarded as a logical organization of information or data objects. A folder of data objects can be thought of as a collection of documents similar to a folder in a filing cabinet. In a computer database environment, a document can be in multiple folders at the same time. Techniques exist in the prior art for entering and removing documents from electronic file folders, searching for documents in a file folder, viewing a list of documents in a file folder, and displaying a list of audit information associated with a document. The prior art also provides the capability for developing parallel distribution lists, i.e., distribution lists in which the file folder is sent out simultaneously to all users (destinations) on the distribution list. The document 'IBM Technical Disclosure Bulletin' vol. 29, feb. 1987 (pages 3831 to 3832) discloses a method with this capability. However, there is no method in the prior art for enabling automated serial distribution of a file folder for appropriate action, such as approval, review or information. Nor is there a method in the prior art for enabling a complete alternating sequence of destinations including a combination of serial and parallel distributions of an electronic file folder. The prior art also provides a technique for automatic delinquency tracking and reporting in which recipients of file folders are reminded of missed dates. The document 'USENIX ASSOCIATION SUMMER CONFERENCE PROCEEDINGS' 13.06.86 (pages 142 to 158 already discloses a corresponding method. There is no method in the prior art according to which after detecting delinquency file folders are sent to other reviewers. Additionally, there is no prior art technique which will enable a sequence of reviewers to make responses or comments electronically and have the comments merged together automatically in a single master history list.

It is therefore an object of this invention to enable complex distributions patterns including combinations of serial and parallel distribution for the dissemination of file folders to a plurality of destinations in a computer integrated manufacturing system.

It is also an object of this invention to provide a method for automatically tracking due dates and reporting the responses from the destinations and the failure of any destination (reviewer) to respond on time.

It is a further object of this invention to provide a method for electronically recording the responses from individual destinations (reviewers) and merging these responses into a master history list.

It is a still further object of this invention to automatically forward the electronic file folder to the next higher level of destinations on the distribution list upon successful completion of the review process at the current level.

These and other objects and advantages are accomplished by this invention in which collections of heterogeneous data objects are assembled in an electronic file folder in a computer integrated manufacturing system and distributed by a file folder manager to an originator-defined scheduled sequence of reviewers for electronic response and appropriate action. The file folder manager allows the users to establish and maintain a library of file folder descriptions. It also provides reports as defined by the originator.

Figure 1 illustrates a computer network implementation of the file folder manager system of this invention.

Figure 2A illustrates a table of contents contained in an electronic file folder.

Figure 2B illustrates a distribution list of reviewers contained in an electronic file folder.

Figure 3 illustrates a graphical representation of the file folder distribution list.

Figure 4 illustrates a graphical representation of a modified file folder distribution list.

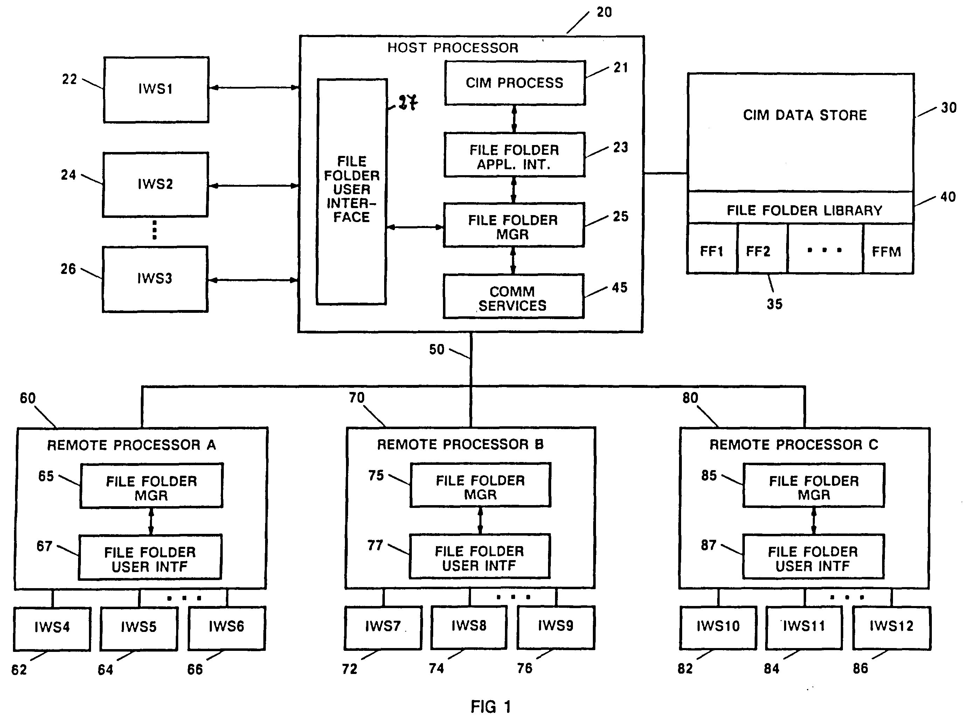

An implementation of the file folder manager system in a computer network is illustrated in Figure 1. One skilled in the art of computer-based manufacturing information systems will be able to apply the concepts discussed herein to both network-based and single data processing system configurations. Although the computer network in Figure 1 is depicted as having a hierarchical relationship between the host processor 20 and remote processors 60, 70, 80 over communications link 50, the network could just as well be depicted as having a distributed peer-to-peer architecture. Likewise, a plurality of individual workstations IWS1 through IWS12 are shown as being directly connected to either host processor 20 or remote processors 60, 70, 80. These workstations could also be linked to their corresponding processor over a local area network (not shown).

Running on host processor 20 is the file folder manager application 25. Users at individual workstations 22, 24 and 26 interact with file folder manager 25 through user interface 27. Also shown operating on the host processor 20 is a Computer Integrated Manufacturing (CIM) application 21, which can also interact with file folder manager 25 through application interface 23. The host processor 20 accesses the direct access storage device (DASD) 30 which contains a CIM data repository including file folder library 40 containing a plurality of file folders FF1, FF2, ... FFM, identified collectively by reference numeral 35.

Additional file folder manager applications 65, 75 and 85 are shown operating on remote processors 60, 70 and 80, respectively. Individual workstations 62, 64 and 66 interact with file folder manager application 65 through user interface 67. Likewise, file folder manager application 75 interacts with workstations 72, 74 and 76 through user interface 77, and file folder manager application 85 interacts with workstations 82, 84 and 86 through user interface 87.

When a destination is on a remote system, the file folder manager 25 uses communication services 45 to route the folder to the remote system. Once the file folder is received at the remote processor 70, the file folder manager 75 manages distribution and tracking at that system to workstations 72, 74, and 76 and communicates the results to the master file folder manager 25 as appropriate.

The user at an individual work station interacts with the file folder manager system to define the contents of the file folder and establish routing instructions for the file folder. Although the preferred embodiment is discussed in the context of a Computer Integrated Manufacturing (CIM) environment, the methods are equally applicable to other collections of business enterprise activities, such as insurance, banking and retail. In addition to system users, any CIM process 21 can use the facilities of the file folder manager system to assemble a packet of information for reference by a common name and to issue routing instructions for the packet. File folder interface 27 allows the user at a workstation such as 22 or a CIM application 21 to create a file folder. The file folder manager 25 confirms that the requested data is available and that the user at workstation 22 is authorized access. The file folder definition is added to the library of CIM information resources 40 so that other users or applications may use it. The routing request is checked for availability of resources and monitoring and tracking points are established. File folder manager 25 actually controls movement of the file folder. The file folder manager 25 monitors delays and sends out automatic reminder notices to each destination that has not responded by the scheduled date. The file folder manager 25 forwards the file folder to higher authority or to an alternate destination for approval when a destination is not available or responsive. The reports function of file folder manager 25 enables users to specify report contents, format, media and schedule. In addition, standard reports are available that include status summary, library contents, and delinquency notices.

Users at individual workstations describe file folder contents by selection from a menu of CIM information resources satisfying a user-defined query. For example, the user might ask for a display of all of the information on a part number and then select the data items that are to be included in a file folder. Users can describe file folder routing to destinations in text or by constructing a graphic network of destinations from icons at a workstation. The types of routings may include "for approval", "for your information", and "review required" along with schedule requirements (due dates) and alternatives for busy destinations.

The file folder manager 25 allows users of CIM applications to define, modify, distribute, and track collections of file folders through the system. The file folder manager 25 monitors activity and provides alerts when file folders are not processed according to the required schedule. It allows users to establish and maintain a library of file folder descriptions 40 and provides reports as defined by the users.

The functional capabilities of the file folder manager 25 include creating or changing a file folder description, routing a file folder, monitoring the distribution and responses received for a file folder, managing a file folder library, sending out file folder related reports, and sending and receiving file folders. The user interface 27 is activated by a user's request for the services of the file folder manager. The user interface 27 selects the desired service and issues a request to the appropriate subfunction of the file folder manager. Help services are also available to users at individual workstations to provide overall application description, assistance for terminal input, and recovery from errors. Similarly, the application interface 23 is activated by a request for the services of the file folder manager from a CIM application 21. Application interface 23 determines the nature of the desired service from CIM application 21 and creates requests that are compatible with those from the user interface 27, i.e., create/change requests, routing requests, report requests and library requests.

The first of the file folder manager functions to be considered is the create/change function. This function enables the definition or modification of a file folder. A file folder definition includes a header, contents listing the data objects contained in the file folder, routing instructions, a comment log, and follow-up reporting specifications. The routing instructions include a list of destinations and the type (i.e., approval, review, or information), as well as due dates for response. The list of destinations may include serial destinations, parallel destinations, and alternate destinations with predicates for selection. The routing has a default (preferred) path from which the file folder plan is constructed. The plan is updated when alternate paths are selected. However, if a destination type is "information", it must be the last destination on a branch, as no response is required. A list of data objects associated with a user-specified topic is displayed for selection and inclusion in a file folder's contents (e.g., everything associated with a particular part). A file folder can be described initially by an originating user at a workstation and then can be modified by other users as it is routed through the enterprise. The modifications can be the addition, deletion or replacement of data objects and the addition of comments which are appended to the file folder.

The file folder definition can be constructed by the user in an interactive terminal session from an individual workstation such as 22, or can be accepted from a CIM application 21. The first component of a file folder definition is the header which specifies a short, unique name and, optionally, a descriptive text as an abstract of the file folder. The header also includes the author, date of original definition, date of last update, and an indication of the completeness of the definition. For a file folder 35 to be considered complete, there must be at least one data object in the contents and at least one legitimate destination for the folder. The owner can modify everything in the definition of a file folder 35 except the name. This includes routing definitions for file folders that have not been executed.

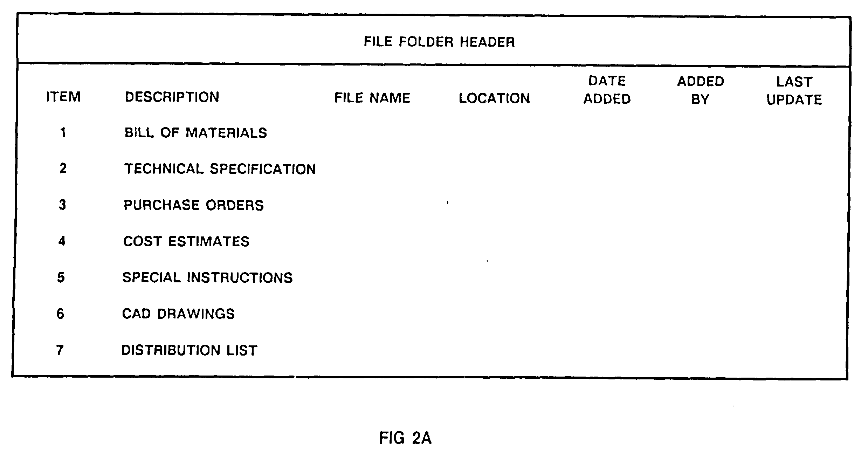

In establishing the contents of a file folder 35, the user may enter a list of CIM data objects or can request that a list of all CIM data objects related to a particular topic be displayed for selection. The specification includes a key that allows either the current value of the data object or the value of the data object at the time of user access to file folder 35 to be included. In the first case, the data object is fixed when it is defined as being an element of the folder. In the second case, the file folder 35 points to the most recent value of the data object when someone looks at the folder. The contents of the file folder 35 also contains a log of comments. The contents of the file folder 35 are summarized in a table of contents that can be displayed by anyone having access to the file folder. The table of contents as illustrated in Figure 2A, includes the data object name, the date it was added to the folder, the date of its last update, and the identification of the user who added it to the folder. Any data object can be added to a file folder, but larger objects such as CAD drawings could create files too large for efficient movement in a network. In these instances, pointers or references to these larger objects should be used to keep the file size below a threshold value which is predefined for a given CIM installation.

Routing instructions are provided by the calling CIM application 21 or by the user at a workstation such as 22 preferably using a graphics editor. The user can enter destinations or select destinations from a menu of CIM users. For each destination, the user specifies the type of destination (action code), the time of an expected response, and the route structure. The destination types include "for approval", "for review", and "for information". Other useful destination types can be included as well. The time of expected response does not apply if the destination type is "for information". The route structures allowed are parallel, serial, and alternate. The default route structure is parallel. Each alternate structure is specified as a list of alternates with the predicate logic that determines the conditions for selection of the alternative. The total routing is a combination of the three types.

The routing function of the file folder manager 25 allows users of CIM applications to change a routing definition for a file folder 35 and to distribute the file folder according to the defined routing. It also creates a list of expected responses (due dates) which, in turn, becomes the basis for a file folder plan that is used to monitor progress and to identify delinquent processes. A completion notice is sent to the appropriate file folder interface (user interface 27 or CIM application interface 23) when the routing request has been satisfied.

In modifying a route definition for a file folder 35, new destinations can be added as in the original definition. However, a destination can be deleted only if the file folder has not been transmitted to the destination.

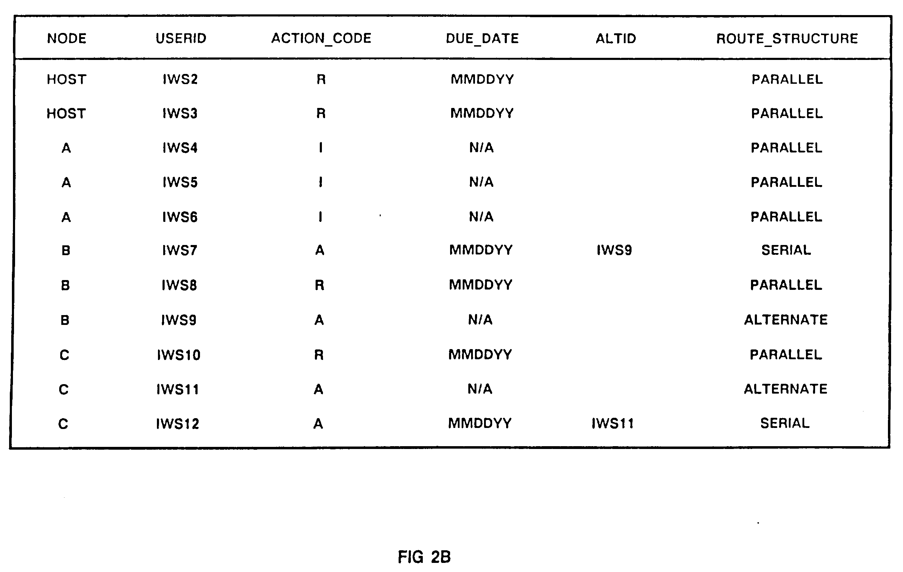

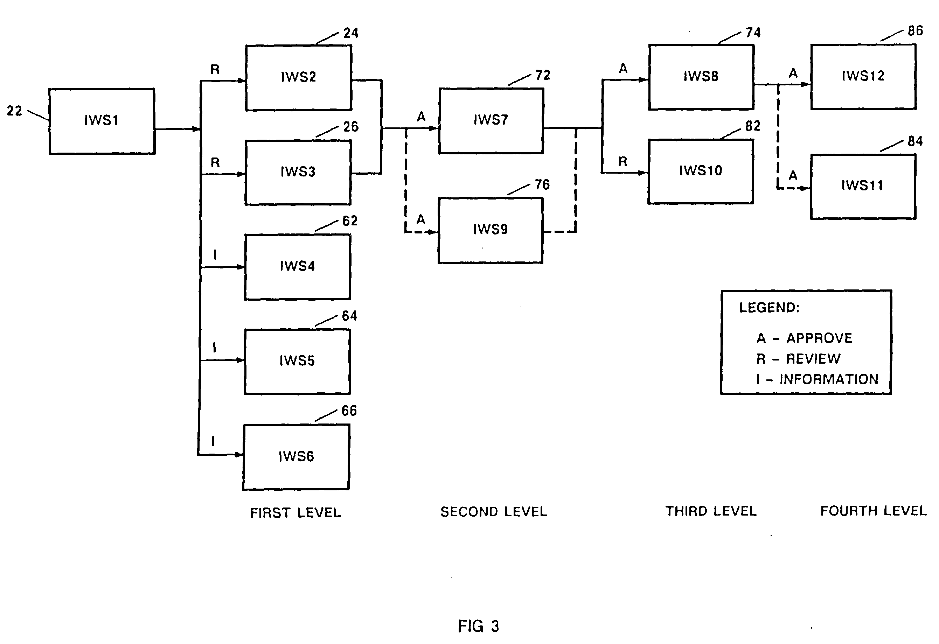

The distribution list in the file folder 35 is a network of users. Each node in the network contains the user's electronic address, the required action code and a schedule date for completion of the action. An illustration of a distribution list is provided in Figure 2B. A graphic representation of this distribution list is shown in Figure 3. File folder manager 25 initially distributes the file folder created by the user at workstation 22 to each of the users at the first level of the network. In Figure 3, the users at the first level include those at workstations 24 and 26 which are to review the file folder contents and those at workstations 62, 64, 66 which receive informational copies. In the preferred embodiment, "review" means the user is expected to review the folder and make comments as appropriate; "approve" means the user must review the folder and respond to the originator before the distribution can continue to the next level.

After all of the required responders have made appropriate responses, the file folder manager 25 routes the folder to the second level of the network (workstation 72) and the process continues. File folder manager 25 uses the schedule information to send automatic reminder notices to any destination of the review or approve type that has not responded by the schedule date. For example, if the user at workstation 72 fails to respond by the due date, a reminder notice is sent electronically by the file folder manager 25 along with a revised due date. If the user at workstation 72 still does not respond, the file folder manager 25 will send the file folder to alternate destination 76. This is shown in Figure 3 by the dashed arrow indicating the alternate path of the file folder to workstation 76. Similarly, workstation 84 is indicated as an alternate destination for workstation 86 at the fourth level of distribution.

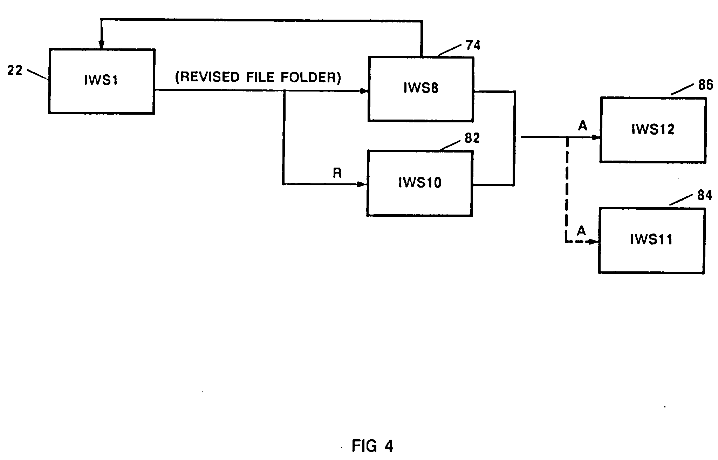

If a required responder such as destination 74 at the third level of distribution does not agree with the file folder, he may log disapproval status, include comments and/or additional data objects. Human interaction is required to reach an accommodation before the folder is ready for the next level of distribution. This is indicated in Figure 4, by the feedback arrow drawn from workstation 74 to workstation 22. Once a compromise is reached, file folder 25 can be modified and resent to the same level of the distribution list for a review of the changes that were made to resolve the issues. If further changes are necessary at a subsequent level of review, then the additional modifications are made to the previously revised file folder so that only one version of the file folder is circulating through the network of destinations.

The monitoring function of file folder manager 25 updates the file folder plan as activities are completed, and issues delinquency reports on late activities. A log is maintained in the file folder plan noting the receipt of file folders at the destinations and the actions taken at the destinations, i.e., approve or modify. Delinquency notices are triggered by expected response reminders. The notice is also sent to the originator of the file folder. If an alternate destination has been specified for a non-responsive review or approval type destination, a file folder routing request is automatically sent to the routing function of file folder manager 25.

The reporting function of file folder manager 25 allows users to specify and update report contents, format, media, distribution lists, and schedules. This function also generates and distributes reports as scheduled. Some of the standard reports are a schedule of planned activities and the current status of activities against the schedule. The schedule of planned activities report is a report of the times of expected responses as defined in the routing, but arranged in chronological order. Reports can be scheduled periodically, on request, or when an event occurs.

The library manager function of file folder manager 25 provides the capability to archive, delete, copy and rename file folders. It also allows the inclusion of a file folder 35 into another file folder. The library includes file folder definitions and file folder plans.

The last function of the file folder manager is the receiver/sender function which allows a user at a workstation or a CIM application 21 to receive a file folder, make permitted modifications, add comments and indicate approval or concurrence. The destinations do not need to physically receive the folder contents. Instead, the destinations may be presented with a menu list of the folder contents so that they can retrieve the actual data objects from the repository as necessary. "Approve" or "review" destinations require access to this function to receive or process the file folder through a file folder processor. The file folder processor prepares receipt notices from review and approval destinations. The recipient is presented with a menu of file folder contents and the values of the data objects can be displayed or printed. If the destination is "for review", the data object may be checked out of the repository and modified. File folder comments are automatically updated to note the change transaction. "For review" and "for approval" destinations may both add comments to the file folder. A file folder action notice is prepared if the user approves the file folder.

## Claims

1. A method for automatically controlling the distribution of a plurality of data objects to a plurality of destinations in a computer-integrated manufacturing environment and including the steps of:
establishing a distribution list of said plurality of destinations to receive selected data objects;
collating the data object contents of an electronic file folder to be distributed to the plurality of destinations on said distribution list;
routing the file folder electronically by an originator to a first level of destinations on said distribution list;
tracking the responses of said first level of destinations and appending the commentary received from said first level of destinations to the contents of said file folder;
and being characterised in that it further includes the following steps:
establishing a precedence relationship among said plurality of destinations thereby creating multiple levels of destinations having an ordered relationship between said levels
routing the file folder electronically in succession to each additional level of destinations on said distribution list after all destinations at the immediately preceding level have responded; and
tracking the responses of each additional level of destinations and appending the commentary received from the destinations at each level to the contents of the file folder before routing said file folder to the next succeeding level of destinations.

2. The method according to claim 1 characterized in that said step of establishing both a distribution list and a precedence relationship includes:
specifying the destinations that are to receive the file folder simultaneously and the destinations that are to receive the file folder serially;
determining a hierarchy of multiple levels of destinations in which all of the destinations at each level must respond before the electronic file folder can be routed to the next sequentially higher level of destinations; and
specifying both an action code and an initial due date for response for each destination on the distribution list.

3. The method according to claim 2 characterized in that the action code specified for each destination indicates the type of response required by that destination.

4. The method according to claim 1 characterized in that said step of collating the data object contents of the electronic file folder includes:
selecting each data object to be contained in the electronic file folder;
listing each data object to be contained in the file folder in a file folder table of contents;
placing within said file folder each listed data object that is stored in a data file whose size does not exceed a threshold file size; and
placing a pointer within said file folder for each listed data object that is stored in a data file whose size exceeds said threshold file size.

5. The method according to claim 4 characterized in that it further includes placing a reference locator within said file folder for each listed data object that is not stored in an electronic medium.

6. The method according to claim 2 characterized in that the steps of tracking the responses of said first level and tracking the responses of each additional level of destinations includes:
sending a notification electronically to the originator of the file folder when each response is received;
sending a reminder electronically with a revised due date to each destination that fails to send a response to the file folder by said initial due date; and
sending a notification electronically to an alternate destination that has approving authority for a destination of the file folder that fails to respond by said revised due date after receiving said reminder.

7. The method according to claim 1 characterized in that it further includes:
interrupting the distribution of said file folder to the next succeeding level of destinations if at least one of the destinations that have been sent the file folder disagrees with its contents;
modifying the contents of the file folder to resolve the disagreement that interrupted the distribution; and
routing the modified file folder in turn to the next succeeding level and each additional level of destinations.

8. The method according to claim 7 characterized in that all modifications to the file folder are cumulative in effect so that only a single file folder containing each previous modification is being routed to said plurality of destinations at any time.

9. A system for automatically controlling the distribution of data objects in a computer-integrated manufacturing environment having at least one data processor (20), at least one direct access storage devices (30), and a plurality of individual workstations (IWS) for interacting with the data processor and serving as destinations for said data objects, said system comprising:
first logic means (25) operating on a first data processor for collecting said data objects into an electronic file folder, routing said electronic file folder to a plurality of destination workstations, and tracking the responses made by each of said plurality of destination workstations after receiving said electronic file folder; and
said system being characterized in that it further comprises
first interface means (27) cooperative with each of said plurality of destination workstations and said first logic means for defining the contents of the electronic file folder and specifying the sequence in which said plurality of destination workstations are to receive said electronic file folder.

10. The system according to claim 9 characterized in that it further includes second interface means (23) cooperative with said first logic means for enabling a manufacturing application program operating on said first data processor to define the contents of said electronic file folder and specify the sequence in which said plurality of destination workstations are to receive said electronic file folder.

11. The system according to claim 9 characterized in that it further includes means (40) for storing said electronic file folder in a library of file folder descriptions on said direct access storage device.

12. The system according to claim 9 characterized in that it further includes:
communications services means (45) for transmitting said electronic file folder to a second data processor (60,70,80) remote from said first data processor; and
second logic means (65,75,85) operating on said second data processor for routing said electronic file folder to at least one destination workstation connected electrically to said second data processor and tracking the response of said at least one destination workstation.

## Patentansprüche

1. Ein Verfahren zur automatischen Steuerung der Verteilung einer Mehrzahl von Datenobjekten an eine Mehrzahl von Zielen in einer computerintegrierten Produktionsumgebung, das folgende Schritte umfaßt:
Erstellung einer Verteilungsliste der genannten Mehrzahl an Zielen, um ausgewählte Datenobjekte zu empfangen;
Vergleich der Datenobjektinhalte eines elektronischen Aktenordners, die an die Mahrzahl an Zielen auf der genannten Verteilerliste verteilt werden sollen;
Elektronische Lenkung des Aktenordners durch einen Urheber an eine erste Zielebene auf der genannten Verteilerliste;
Einholung der Reaktionen der genannten ersten Zielebene und Anhängung der von der genannten ersten Zielebene erhaltenen Kommentare an die Inhalte des genannten Aktenordners;
dadurch charakterisiert, daß das Verfahren weiterhin folgende Schritte umfaßt:
Herstellung eines Prioritätsverhältnisses in der genannten Mehrzahl an Zielen, wodurch mehrere Zielebenen geschaffen werden, die zwischen den genannten Ebenen ein geordnetes Verhältnis aufweisen;
Elektronische Lenkung des Aktenordners nacheinander auf jede zusätzliche Zielebene auf der genannten Verteilerliste, nachdem alle Ziele auf der unmittelbar vorhergehenden Ebene reagiert haben; und Lenkung der Reaktionen jeder zusätzlichen Zielebene und Anhängung der von den Zielen auf jeder Ebene erhaltenen Kommentare an die Inhalte des Aktenordners, bevor der genannte Aktenordner auf die nächste folgende Zielebene gelenkt wird.

2. Das Verfahren gemäß Anspruch 1, dadurch charakterisiert, daß jeder Schritt zur Erstellung sowohl einer Verteilerliste als auch eines Prioritätsverhältnisses folgendes umfaßt:
Angabe der Ziele, an denen der Aktenordner gleichzeitig, und der Ziele, an denen der Aktenordner seriell empfangen werden soll;
Bestimmung einer Hierarchie mehrerer Zielebenen, auf denen alle Ziele auf jeder Ebene ansprechen müssen, bevor der elektronische Aktenordner zur nächsten in der Sequenz höheren Zielebene gelenkt werden kann; und
Angabe sowohl eines Aktionscodes und eines anfänglichen Fälligkeitszeitpunkts zur Reaktion für jedes Ziel auf der Verteilerliste.

3. Das Verfahren gemäß Anspruch 2, dadurch charakterisiert, daß der für jedes Ziel spezifizierte Aktionscode die Art der für dieses Ziel erforderlichen Reaktion angibt.

4. Das Verfahren gemäß Anspruch 1, dadurch charakterisiert, daß der Schritt des Vergleichs der Datenobjektinhalte des elektronischen Aktenordners folgendes umfaßt:
Auswahl jedes Datenobjekts, das im elektronischen Aktenordner enthalten sein soll;
Auflistung jedes Datenobjekts, das im Aktenordner in einem Aktenordner-Inhaltsverzeichnis enthalten sein soll;
Einfügung jedes aufgelisteten Datenobjekts, das in der Datendatei gespeichert ist und dessen Größe eine Dateischwellengröße nicht überschreitet, in den genannten Aktenordner; und
Einfügung eines Zeigers für jedes aufgelistete Datenobjekt, das in der Datendatei gespeichert ist und dessen Größe eine Dateischwellengröße überschreitet, in den genannten Aktenordner.

5. Das Verfahren gemäß Anspruch 4, dadurch charakterisiert, daß es weiterhin für jedes aufgelistete Datenobjekt, das nicht auf einem elektronischen Medium gespeichert ist, die Einfügung eines Verweisfinders in den genannten Aktenordner umfaßt.

6. Das Verfahren gemäß Anspruch 2, dadurch charakterisiert, daß die Schritte der Einholung der Reaktionen der genannten ersten Zielebene und der Einholung der Reaktionen jeder weiteren Zielebene folgendes umfaßt:
Absendung einer elektronischen Benachrichtigung an den Urheber des Aktenordners, sobald jede Reaktion empfangen wird;
Absendung eines elektronischen Erinnerungshinweises mit einem geänderten Fälligkeitszeitpunkt an jedes Ziel, das nicht bis zum genannten anfänglichen Fälligkeitszeitpunkt eine Reaktion an den Aktenordner sendet; und
Absendung einer elektronischen Benachrichtigung an ein anderes Ziel, das die Vollmacht zur Genehmigung eines Ziels des Aktenordners besitzt, der nicht bis zum genannten geänderten Fälligkeitszeitpunkt nach Empfang des genannten Erinnerungshinweises reagiert.

7. Das Verfahren gemäß Anspruch 1, dadurch charakterisiert, daß es weiterhin folgendes umfaßt:
Abbruch der Verteilung des genannten Aktenordners an die nächste folgende Zielebene, wenn mindestens eines der gesendeten Ziele, die an den Aktenordner gesendet wurden, nicht mit seinen Inhalten übereinstimmt;
Änderung der Inhalte des Aktenordners, um die Nichtübereinstimmung aufzulösen, die zum Abbruch der Verteilung geführt hat; und
weitere Lenkung des geänderten Aktenordners an die nächste folgende Zielebene und an jede zusätzliche Zielebene.

8. Das Verfahren gemäß Anspruch 1, dadurch charakterisiert, daß alle Änderungen des Aktenordners angehäuft werden, so daß jederzeit nur ein einziger Aktenordner, der jede vorherige Änderung enthält, an die genannte Mehrzahl von Zielen gelenkt wird.

9. Ein System zur automatischen Steuerung der Verteilung von Datenobjekten in einer computerintegrierten Produktionsumgebung, das mindestens einen Datenprozessor (20), mindestens eine Speichereinrichtung mit direktem Zugriff (30) und eine Mehrzahl einzelner Workstations (IWS) für die Kommunikation mit dem Datenprozessor umfaßt, wobei die Workstations auch als Ziele für die genannten Datenobjekte dienen, wobei das genannte System folgendes umfaßt:
ein erstes Logikmittel (25), das auf einem ersten Datenprozessor arbeitet und die genannten Datenobjekte in einem elektronischen Aktenordner sammelt, den genannten elektronischen Aktenordner zu einer Mehrzahl an Ziel-Workstations lenkt und die Reaktionen jeder der genannten Mehrzahl von Workstations einholt, nachdem der genannte elektronische Aktenordner empfangen wurde; und
wobei das System weiterhin dadurch charakterisiert ist, daß es ein erstes Schnittstellenmittel (27) umfaßt, das mit jedem der Mehrzahl der Ziel-Workstations und mit dem genannten ersten Logikmittel zusammenarbeitet, um die Inhalte des elektronischen Aktenordners zu definieren und die Reihenfolge zu spezifizieren, in der die genannte Mehrzahl der Ziel-Workstations den elektronischen Aktenordner empfangen sollen.

10. Das Verfahren gemäß Anspruch 9, dadurch charakterisiert, daß es weiterhin ein zweites Schnittstellenmittel (23) umfaßt, das mit dem ersten Logikmittel zusammenarbeitet und einem Produktionsanwendungsprogramm gestattet, auf dem genannten ersten Datenprozessor die Inhalte des genannten elektronischen Aktenordners zu definieren und die Reihenfolge zu spezifizieren, in der die genannte Mehrzahl der Ziel-Workstations den elektronischen Aktenordner empfangen sollen.

11. Das Verfahren gemäß Anspruch 9, dadurch charakterisiert, daß es weiterhin ein Mittel (40) zur Speicherung des genannten elektronischen Aktenordners in einer Bibliothek von Aktenordnerbeschreibungen auf der genannten Speichereinrichtung mit direktem Zugriff umfaßt.

12. Das Verfahren gemäß Anspruch 9, dadurch charakterisiert, daß es weiterhin folgendes umfaßt:
ein Mittel für Kommunikationsdienste (45) zur Übertragung des genannten elektronischen Aktenordners an einen zweiten Datenprozessor (60, 70, 80), der vom genannten ersten Datenprozessor entfernt liegt; und
ein zweites Logikmittel (65, 75, 85), das auf dem genannten zweiten Datenprozessor arbeitet und den genannten elektronischen Aktenordner an mindestens eine Ziel-Workstation lenkt, die mit dem genannten zweiten Datenprozessor elektrisch verbunden ist und die Reaktion mindestens der genannten einen Ziel-Workstation einholt.

## Revendications

1. Procédé pour contrôler automatiquement la distribution d'une pluralité d'objets d'information à une pluralité de destinations dans un environnement de productique intégrée, comprenant les étapes consistant à :
établir une liste de distribution de ladite pluralité de destinations devant recevoir des objets d'information sélectionnés ;
interclasser le contenu en objets d'information d'un dossier électronique à distribuer à la pluralité de destinations sur ladite liste de distribution ;
faire acheminer électroniquement le dossier par un expéditeur jusqu'à un premier niveau de destinations sur ladite liste de distribution ;
suivre les réponses du dit premier niveau de destinations et adjoindre le commentaire reçu en provenance du dit premier niveau de destinations au contenu du dit dossier;
et étant caractérisé en ce qu'il comprend, de plus, les étapes consistant à :
établir une relation de priorité parmi ladite pluralité de destinations pour créer des niveaux de destinations multiples ayant une relation ordonnée entre eux ;
acheminer électroniquement ledit dossier à chaque niveau de destinations successif sur ladite liste de distribution une fois que toutes les destinations du niveau immédiatement précédent ont répondu ; et
suivre les réponses de chaque niveau de destinations supplémentaire et adjoindre le commentaire reçu en provenance des destinations de chaque niveau au contenu du dit dossier avant d'acheminer ledit dossier vers le niveau de destinations immédiatement suivant.

2. Procédé selon la revendication 1, caractérisé en ce que ladite étape consistant à établir une liste de distribution et une relation de priorité comprend elle-même les étapes consistant à :
spécifier les destinations qui doivent recevoir le dossier simultanément et les destinations qui doivent recevoir le dossier en mode série ;
déterminer une hiérarchie de niveaux de destinations multiples dans laquelle toutes les destinations à chaque niveau doivent répondre avant que le dossier électronique puisse être acheminé vers le niveau de destinations immédiatement suivant ; et
spécifier un code d'action et une échéance initiale pour chaque destination sur la liste de distribution.

3. Procédé selon la revendication 2, caractérisé en ce que le code d'action spécifié pour chaque destination indique le type de réponse requis par cette destination.

4. Procédé selon la revendication 1, caractérisé en ce que ladite étape d'interclassement du contenu en objets d'information du dossier électronique contient elle-même les étapes consistant à :
sélectionner chaque objet d'information à inclure dans le dossier électronique ;
lister chaque objet à inclure dans le dossier électronique dans une table des matières de dossier électronique ;
placer dans ledit dossier électronique chaque objet d'information listé qui est mémorisé dans un fichier de données dont la taille ne dépasse pas une taille de fichier seuil ; et
placer un pointeur dans ledit dossier électronique pour chaque objet d'information qui est mémorisé dans un fichier de données dont la taille dépasse ladite taille de fichier seuil.

5. Procédé selon la revendication 4, caractérisé en ce qu'il comprend, de plus, l'étape consistant à placer un localisateur de référence dans ledit dossier pour chaque objet d'information listé qui n'est pas mémorisé sur un support électronique.

6. Procédé selon la revendication 2, caractérisé en ce que les étapes consistant à suivre les réponses du dit premier niveau et à suivre les réponses de chaque niveau de destinations supplémentaire comprennent elles-mêmes les étapes consistant à :
transmettre électroniquement une notification à l'expéditeur du dossier lorsque chaque réponse est reçue ;
transmettre électroniquement une relance avec une échéance révisée à chaque destination qui n'a pas transmis de réponse au dossier à ladite échéance ; et
transmettre électroniquement une notification à une autre destination qui a autorité d'approbation pour une destination du dossier qui n'a pas répondu à ladite échéance révisée après avoir reçu ladite relance.

7. Procédé selon la revendication 1, caractérisé en ce qu'il comprend, de plus, les étapes consistant à :
interrompre la distribution du dit dossier au niveau de destinations immédiatement suivant si au moins l'une des destinations auxquelles le dossier est destiné est en désaccord avec son contenu ;
modifier le contenu du dossier pour résoudre le désaccord à l'origine de l'interruption de la distribution ; et
acheminer ensuite le dossier modifié au niveau immédiatement suivant et à chaque niveau de destinations supplémentaire.

8. Procédé selon la revendication 7, caractérisé en ce que toutes les modifications apportées au dossier sont cumulatives de fait, en sorte qu'un seul dossier contenant chaque modification préalable est acheminé vers ladite pluralité de destinations à un instant donné.

9. Système pour contrôler automatiquement la distribution d'objets d'information dans un environnement de productique intégrée comprenant au moins un processeur de données (20), au moins un dispositif de mémorisation à accès direct (30) et une pluralité de postes de travail individuels (IWS) pour interagir avec le processeur de données et servir de destinations pour les dits objets d'information, ledit système comprenant :
un premier élément logique (25) exploité sur un premier processeur de données pour rassembler les dits objets d'information dans un dossier électronique, acheminer ledit dossier électronique vers une pluralité de postes de travail de destination et suivre les réponses faites par chaque poste de travail de ladite pluralité de postes de travail de destination après avoir reçu ledit dossier électronique ;
ledit système étant caractérisé en ce qu'il comprend, de plus :
un premier élément d'interfaçage (27) concourant avec chacun des postes de travail de ladite pluralité de postes de travail de destination et avec ledit premier élément logique pour définir le contenu du dossier électronique et spécifier l'ordre dans lequel les dits postes de travail de destination doivent recevoir ledit dossier électronique.

10. Système selon la revendication 9, caractérisé en ce qu'il comprend, de plus, un deuxième élément d'interfaçage (23) concourant avec ledit premier élément logique pour permettre à un programme d'application de production exploité sur ledit premier processeur de données de définir le contenu du dit dossier électronique et de spécifier l'ordre dans lequel les dits postes de travail de destination doivent recevoir ledit dossier électronique.

11. Système selon la revendication 9, caractérisé en ce qu'il comprend, de plus, un élément (40) pour mémoriser ledit dossier électronique dans une bibliothèque de descriptions de dossiers sur ledit dispositif de mémorisation à accès direct.

12. Système selon la revendication 9, caractérisé en ce qu'il comprend, de plus :
un élément de services de transmission (45) pour transmettre ledit dossier électronique à un deuxième processeur de données (60, 70, 80) distant du dit premier processeur de données ; et
un deuxième élément logique (65, 75, 85) sur ledit deuxième processeur de données pour acheminer ledit dossier électronique vers au moins un poste de travail de destination connecté électriquement au dit deuxième processeur de données et pour suivre la réponse du dit poste de travail de destination.
